# EUROPEAN PATENT SPECIFICATION

(11) **EP 1 926 309 B1**
(45) Date of publication and mention of the grant of the patent: **06.10.2010**
(21) Application number: 07021284.0
(22) Date of filing: 31.10.2007
(51) Int. Cl.: H04N 5/44, H04N 5/50

(54) **Method and apparatus of locating programs in a frequency band**
Verfahren und Vorrichtung zur Auffindung von Programmen in einem Frequenzband
Procédé et appareil de localisation de programmes dans une bande de fréquence

(30) Priority: 27.11.2006 CN 200610162529
(43) Date of publication of application: 28.05.2008
(73) Proprietor: AU Optronics Corporation, Hsinchu 300 (TW)
(72) Inventor: Chang, Chih-Cheng, Keelung City 204 (TW); Tan, Ming-Che, Da-An District Tapei (TW)
(74) Representative: Brandenburger, Karin

(56) References cited:
- EP-A- 1 156 611
- WO-A-97/32421
- WO-A-2004/093327
- DE-A1- 4 439 658

## Description

### BACKGROUND OF THE INVENTION

### Field of the Invention

The invention relates to methods and systems for locating programs, and, more particularly, to methods and systems for efficiently locating television programs.

Typically, televisions are equipped with a program searching device or method for locating television signals in a given frequency band. The program searching function is essential if the television has never been used. Typically, all viewable television programs are recorded at first use, and thus when the television is next used, only viewable programs are presented for selection. Locating all the programs in a given frequency band is, however, a time-consuming task. Thus, a solution for more efficiently and rapidly locating all viewable programs is desirable.

### BRIEF SUMMARY OF THE INVENTION

The invention is set out in the independent claims and advantageous embodiments are set out in the dependent claims.

### BRIEF DESCRIPTION OF THE DRAWINGS

The invention will become more fully understood from the detailed description given herein below, and the accompanying drawings. The drawings and description are provided for purposes of illustration only, and, thus, are not invended to be limiting of the invention.

Figs. 1a and 1b show a flowchart of locating a program in a frequency band according to an embodiment of the invention; and

Fig. 2 shows a block diagram of a system 20 for locating a program in a frequency band according to an embodiment of the invention.

### DETAILED DESCRIPTION OF THE INVENTION

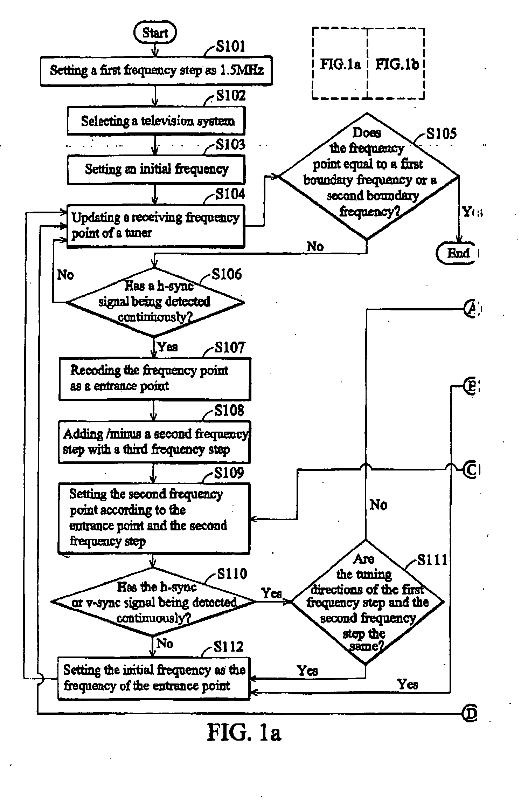

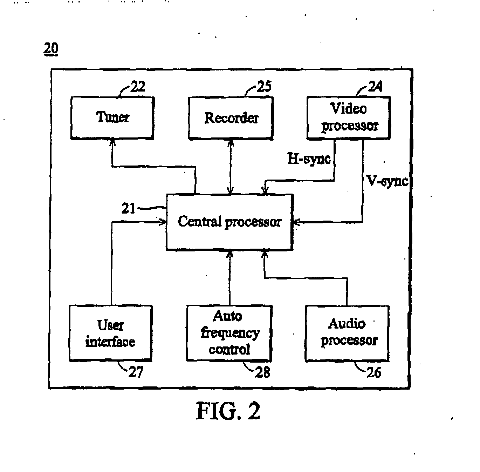

Fig. 2 shows a block diagram of a system 20 for locating a program in a frequency band according to an embodiment of the invention. A central processor 21 searches for a frequency containing a television program in the frequency band in accordance with a horizontal synchronization signal (h-sync), a vertical synchronization signal (v-sync), an audio signal, and a frequency control signal. The audio signal is provided by an audio processor 26. The frequency control signal is provided by an auto frequency control 28. The central processor 21 determines if a higher frequency band or a lower frequency band is searched, and further determines the sizes of search windows based on the frequency control signal. A recorder 25, connected to the central processor 21 records the number of times step S109 in Fig. 1a is executed. The recorder 25 also records the frequency carrying the television signal. A user interface 27 is connected to the central processor 21. A user can select a desired television system through user interface 27.

The h-sync and v-sync are provided by a video processor 24. When the central processor 21 successfully receives the h-sync, the upper and lower edges of television frame align with a screen. In other words, if the h-sync is not received successfully, the frame is divided into two parts, the lower part of the frame at pears in the upper side of the screen, and the upper part of the frame appears in the lower side of the screen. V-sync also has similar characteristics. When the central processor 21 successfully receives the v-sync, the left and right edges of television frame align with the screen.

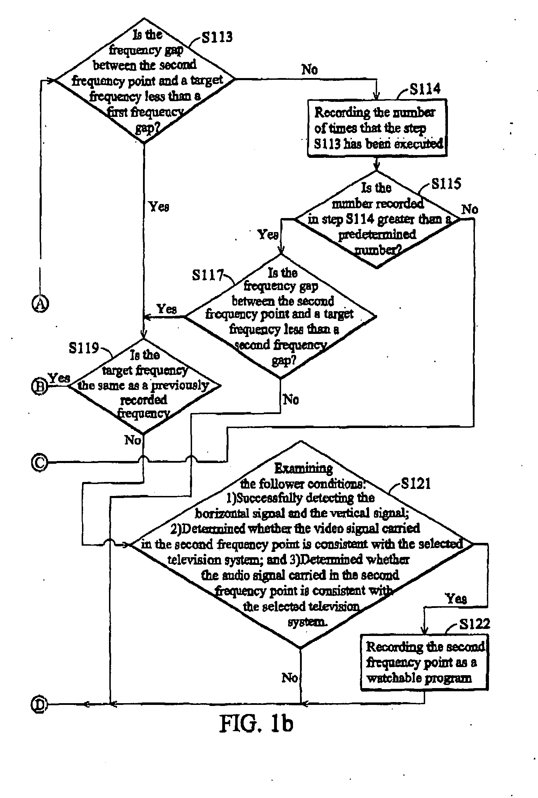

Figs. 1a and 1b show a flowchart of locating a program in a frequency band according to an embodiment of the invention, In one embodiment of the invention, the auto frequency control 28 can search the frequency band by a wider window (a first frequency step), and then search the frequency band by a narrower window (a second frequency step). That is, a tuner can roughly tune in a first frequency step, then fine tune in the second frequency step.

In step S101, the first frequency step is set 1.5MHz. In step S102, a television system is selected. The television system can be Phase Alternating Line (PAL) or Sequential Couleur Avec Memoire (SECAM). In step S103, an initial frequency is set. In this embodiment, suppose the television frequency band is from a first boundary 41.25MHz to a second boundary 866.25MHz. Thus, in this embodiment, the initial frequency can be selected as 41.25MHz. In step S104, the tuner tunes to a frequency point, which is the initial frequency plus the first frequency step. In step S105, the frequency point is determined. If the frequency point is less than the first boundary 41.25MHz or exceeds the second frequency boundary 865.25MHz, the flow ends with step S105; otherwise the horizontal signal is derected (S106). If the horizontal signal is continuously detected a predetermined number of times, the frequency point is recorded as an entrance point (S107). If the horizontal signal is not continuously detected a predetermined number of times, the process returns to step S104 to update the frequency point according to the first frequency step. In one embodiment of the invention, the predetermined number of times is two The reason for continuously detecting the horizontal signal twice in step S106 is that only detecting the horizontal signal once may likely result in a noise signal being detected as a television signal. In step S109, a second frequency point is set according to the entrance point and a second frequency step. The second frequency point may be the entrance point plus the second frequency step or minus the second frequency step, depending on a frequency control signal. For example, if the initial frequency is 41.25MHz, and a user wants to search the upper frequency band (a frequency control signal is "up"), then the second frequency point is the entrance point plus the second frequency step. If a user wants to search the lower frequency band and sends a "low" frequency control signal, the second frequency point is the entrance point minus the second frequency step. The second frequency step size may be up to the tuning step of the tuner. In the embodiment, the second frequency step may be 187.5kHz 128.5kHz, 62.5kHz, 37.5kHz, or 12.5kHz.

In an embodiment of the invention, the second frequency point may be the entrance point plus or minus a third frequency step in advance, and then plus or minus the second frequency step (S108), wherein the third frequency step is less than the first frequency step but exceeds the second frequency step. The size of the third frequency step may be decided by experimental results. Please note that while step S108 is optional it may save more time to locate programs by utilizing the third frequency step. In step S110, the vertical signal or the horizontal signal is continuously detected at the second frequency point by the predetermined number of times. If the vertical signal or the horizontal signal is not continuously detected it means that in step S106 the detected horizontal signal was actually a noise signal. The initial frequency is then updated to be the frequency of the current entrance point (S112), and returns to step S104. On the other hand, if the vertical signal or the horizontal signal can be continuously detected the predetermined numbers of times, the directions of fine tune and rough tune are checked (S111).

If a user wants to search upward, the tuner tunes a frequency point which is the initial frequency plus the first frequency step. When the auto frequency control 28 determines that there may be a program within the first frequency step, the second frequency step is used to fine tune the frequency. When the auto frequency control decides to search program at the frequency point minus the second frequency step, it may represent that the auto frequency control has misjudged. Thus, in step S111 it is checked whether the directions of the first and the second frequency steps are different. If true, the flow proceeds to step S112. If the directions of fine tune and rough tune are the same, the flow proceeds to step S113.

In step S113, a first gap between the second frequency point and a target frequency is measured according to the frequency control signal. The target frequency is an estimated frequency carrying a television program. If the first gap is less than a first frequency gap, the process flow proceeds to step S119. If the first gap exceeds the first frequency gap, the number of times the first frequency gap is so exceeded is recorded (S114). In this embodiment, the first frequency is 31.5 MHz. In step S115, the number recorded in step S114 is compared with a predetermined number. In this embodiment, the predetermined number is 6. Step S114 may prevent locating ghost programs. For example, if the first gap between the second frequency point and a target frequency is 75kHz, it takes six adjustments of the tuner by the second frequency step 12.5kHz to reach the target frequency. If the tuner tunes to the estimated target frequency but the auto frequency control continues to fine tune the tuner, the estimated target frequency may represent a ghost program or the signal at the target frequency may be too weak to be received. If the first gap is unable to converge after repeated attempts, the estimated target frequency may be a ghost program. If the recorded number in step S114 does not exceed the predetermined number, the flow returns to step S109. If the recorded number in step S114 exceeds the predetermined number, the first gap is compared with a second frequency gap in step S117. If the number of fine tuning attempts exceeds the predetermined number, it is possible that the signal in the target frequency is oc weak. It may help to locate the weak program by checking whether the gap between the target frequency and the second frequency point, i.e. the first gap, is less than the second frequency gap. In this embodiment of the invention, suppose the second frequency gap is 62.5KHz. The second frequency gap must exceed the first frequency gap. If in step S117, the gap between the target frequency and the second frequency point, i.e. the first gap, is less than the second frequency gap, the second frequency point is compared with a previously recorded frequency in step S119. When the second frequency point is the same as the previously recorded frequency, the second frequency point is the same the as previously located program. Thus, the flow returns to step S112. If, in step S117, the measured gap exceeds the second frequency gap the estimated frequency is a ghost program instead of a program with weak signals. The flow returns to step S104, and the initial frequency is updated as the second frequency point plus or minus the second frequency step. The frequency control signal is used to determine whether the updated initial frequency is the second frequency point plus the second frequency step or the second frequency point minus the second frequency step.

If, in step S119, the second frequency point is not the same as the previously recorded frequency, the second frequency point is examined by a condition (S121). The condition comprises: successfully detecting the horizontal signal and the vertical signal; determining whether the video signal carried in the second frequency point is consistent with the television system selected in step S102, and determining whether the audio signal carried in the second frequency point is consistent with the aforementioned selected television system. Occasionally, noise or ghost programs are recognized as a target program. Thus in step S121, the horizontal signal and vertical signal is re-checked to avoid that undesired situation. If the condition is satisfied, the second frequency point is recorded, indicating that a television program exists in the frequency. The flow then proceeds to step S104 for further searching. If the condition in step S121 is not satisfied, the flow directly proceeds to step S104.

In another embodiment of the invention, the initial frequency can be set to 866.25 in step S103. In step S104 of this embodiment, the updated initial frequency point is therefore the original initial frequency minus the first frequency step.

In Europe, multiple television systems are in use. The apparatus and methods of the invention are suitable for a variety of television systems. For example, a user can search for of BG, DK and I television programs in the PAL system and then search for L and L' television programs in the SECAM system. A user can alternatively search the SECAM system first then the PAL system.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. Method for locating a program in a frequency band, comprising:
(0) setting an initial frequency and a first frequency step;
(a) determining a frequency point, which starts from one of the initial frequencies and results from the initial frequency and the first frequency step;
(a1) checking whether the frequency point exceeds the boundary values of the frequency band, which are determined by TV-system;
(a2) checking whether the frequency point satisfies a first condition which is continuously detecting a horizontal synchronizing signal and checking whether it appears in a predetermined number of times;
(b) when the first condition Is satisfied, recording the frequency point as an entrance point, and when the first condition is not satisfied, updating the initial frequency by adding or subtracting the first frequency step to/from the initial frequency and going to step (a);
(c) determining a second frequency point, which starts from the entrance point and results from the entrance point, the second frequency step and a frequency control signal generated by an auto frequency control, wherein the second frequency step is less than the first frequency step, and checking whether the second frequency point satisfies a second condition which is continuously detecting a vertical synchronizing signal or the horizontal synchronizing signal and checking whether it appears in a predetermined number of times;
(d) when the seconde condition is satisfied, determining whether a difference between the second frequency point and a target frequency, which is an estimated frequency carrying a television program, is less than a first frequency difference;
(e) when the second condition is not satisfied, updating the initial frequency to be the frequency of the entrance point and going to step (a);
(f) if the difference determined in step (d) between the second frequency point and the target frequency is less than the first frequency difference, recording that a television program exists at the second frequency point; if the difference is equal to or greater than the first frequency difference, then not recording the second frequency point as a television program;
(g) updating the initial frequency as in step (b) and repeating steps (a)-(f) through the frequency band.

2. The method as claimed in claim 1, wherein in step (f) further comprises:
(f1) incrementing a number if the difference between the second frequency point and the target frequency exceeds the first frequency difference, and determining whether the number exceeds a predetermined number;
(f2) when the number exceeds the predetermined number, determining whether the difference between the second frequency point and the target frequency exceeds a second frequency difference, wherein the second frequency difference is higher than the first frequency difference; and
(f3) when the number does not exceed the predetermined number, updating the entrance point to be the second frequency point, and going to step (c).

3. The method as claimed in claim 2, wherein the step (f2) further comprises:
(h) when the difference between the second frequency point and the target frequency does not exceed the second frequency difference, determining if the second frequency point is the same as a previously recorded frequency; if true, updating the initial frequency to be the second frequency point, and going to step (g).

4. The method as claimed in claim 3, wherein the step (h) further comprises updating the initial frequency as in step (b) and going to step (g) when the difference between the second frequency point and the target frequency exceeds the second frequency difference.

5. The method as claimed in claim 3, wherein the step (h) further comprises checking whether the second frequency point satisfies a third condition when the second frequency point is different from the previously recorded frequency, and recording that the television program exists at the second frequency point, wherein the third condition comprises:
(h1) successfully detecting the horizontal synchronizing signal and the vertical synchronizing signal;
(h2) a video signal carried in the second frequency point consistent with a predetermined television system; and
(h3) an audio signal carried in the second frequency point consistent with the predetermined television system.

6. The method as claimed in claim 5 further comprising: updating the initial frequency as in step (b) and going to step (g) when the third condition is not satisfied.

7. The method as claimed In claim 1, wherein determining the second frequency point is determining whether to set the frequency of the second frequency point as either (1) the frequency of the entrance point plus the second frequency step, or (2) the frequency of the entrance point minus the second frequency step, according to the frequency control signal.

8. The method as claimed in claim 7, wherein:
the frequency point in step (a) is a frequency equal to the initial frequency plus the first frequency step, and the method further comprises:
updating the initial frequency to be the frequency of the entrance point; and
going to step (a) if the second frequency point determined in step (c) is equal to the entrance point minus the second frequency step.

9. The method as claimed In clam 7, wherein the frequency point in step (a) is a frequency equal to the initial frequency minus the first frequency step, and further comprises updating the initial frequency to be the frequency of the entrance point and going to step (a) if the second frequency point determined In step (c) is equal to the entrance point plus the second frequency step.

10. The method as claimed in claim 1, before step (c), further comprising detecting whether a television program exists at a frequency which is a third frequency step away from the entrance point, wherein the third frequency step Is less than the first frequency step but exceeds the second frequency step.

11. A program searching apparatus (20) for locating a program in a frequency band, comprising:
a tuner (22) configured for tuning to a frequency point generated from a first frequency step and an initial frequency or tuning to a second frequency point generated from a second frequency step and an entrance point;
a video processor (24) configured for providing a horizontal synchronizing signal and a vertical synchronizing signal; and
a central processor (21) configured for executing the method of claim 1.

12. The apparatus (20) as claimed in claim 11, further comprising an auto frequency control (28) configured for providing a frequency control signal, wherein the step (c) further comprises detecting the second frequency point according to the frequency control signal, the entrance point, and the second frequency step, and determining whether a signal received at the second frequency point satisfies a second condition which is continuous detection of the vertical synchronizing signal or the horizontal synchronizing signal by the predetermined number of times; when the second condition is satisfied, the central processor (21) configured for determining whether a difference between the second frequency point and a target frequency is less than the first frequency difference, and when the second condition is not satisfied, the central processor (21) updates the initial frequency to be the frequency of the entrance point.

13. The apparatus (20) as claimed in claim 12, wherein the central processor (21) is further configured for determining whether to set the frequency of the second frequency point as 1) the frequency of the entrance point plus the second frequency step, or 2) the frequency of the entrance point minus the second frequency step according to the frequency control signal,
when the frequency point in step (a) equals to the initial frequency minus the first frequency step and the central processor (21) determines to set the frequency of the second frequency point as the frequency of the entrance point plus the second frequency step, the central processor (21) updates the initial frequency to be the frequency of the entrance point and going to step (a); and
when the frequency point In step (a) equals to the initial frequency plus the first frequency step and the central processor (21) determines to set the frequency of the second frequency point as the frequency of the entrance point minus the second frequency step, the central processor (21) updates the initial frequency to be the frequency of the entrance point and going to step (a).

14. The apparatus (20) as claimed in claim 12, further comprising a recorder (25), when the second condition is satisfied and the central processor (21) determines that the difference between the second frequency point and the target frequency exceeds the first frequency difference, the recorder (25) Is configured for Incrementing a number if the difference between the second frequency point and the target frequency exceeds the first frequency difference, and the recorder (25) is configured for determining whether the number exceeds a predetermined number, when the number does not exceed the predetermined number, the recorder (25) is further configured for updating the second frequency point to be the entrance point and the central processor (21) executes step (c).

15. The apparatus (20) as claimed in claim 14, wherein before step (c), the central processor (21) further configured for detecting if a television program exists at a frequency which Is a third frequency step away from the entrance point, and the third frequency step is less than the first frequency step but exceeds the second frequency step.

16. The apparatus (20) as claimed in claim 14, when the number exceeds the predetermined number, the central processor (21) is configured for determining whether a difference between the second frequency point and the target frequency exceeds a second frequency difference, wherein the second frequency difference is greater than the first frequency difference; when the difference between the second frequency point and the target frequency exceeds the second frequency difference, the central processor (21) is further configured for updating the initial frequency according to the first frequency step.

17. The apparatus (20) as claimed In claim 16, when the second condition is satisfied, and the difference between the second frequency point and the target frequency does not exceed the first frequency difference or the second frequency step, the central processor (21) is configured for determining if the second frequency point is the same as a previously recorded frequency; if so, the central processor (21) updates the initial frequency to be the entrance point and goes to step (d).

18. The apparatus (20) as claimed in claim 17, when the central processor (21) Is further configured for determining the second frequency point is not the same as the previously recorded frequency, the central processor (21) further checks if a third condition is satisfied; when the third condition is satisfied, the recorder (25) is configured for recording that the television program exists at the second frequency point, wherein the third condition comprises:
the horizontal synchronizing signal and the vertical synchronizing signal being successfully detected;
the video signal carried in the second frequency point being consistent with a predetermined television system; and
the audio signal carried in the second frequency point being consistent with the predetermined television system.

## Patentansprüche

1. Verfahren zum Auffinden eines Programms in einem Frequenzband, umfassend:
(0) Festlegen einer Anfangsfrequenz und eines ersten Frequenzschritts;
(a) Bestimmung eines Frequenzpunktes, welche an einer der Anfangsfrequenzen beginnt und in der Anfangsfrequenz und dem ersten Frequenzschritt resultiert;
(a1) Prüfen, ob der Frequenzpunkt die Grenzwerte des Frequenzbandes überschreitet, welche durch das TV-System vorbestimmt sind;
(a2) Überprüfen, ob der Frequenzpunkt eine erste Bedingung erfüllt, welche darin besteht, ein horizontales Synchronisierungssignal kontinuierlich zu erfassen und zu überprüfen, ob es in einer vorbestimmten Anzahl auftritt;
(b) wenn die erste Bedingung erfüllt ist, Aufzeichnen des Frequenzpunktes als einen Eintrittpunkt, und wenn die erste Bedingung nicht erfüllt ist, Aktualisieren der Anfangsfrequenz durch ein Hinzufügen oder Abziehen des erste Frequenzschrittes von /zu der Anfangsfrequenz und Weiterverfahren mit Schritt (a);
(c) Bestimmen eines zweiten Frequenzpunktes, welches am Eintrittspunkt beginnt und sich durch den Eintrittspunkt, den zweiten Frequenzschritt und ein Frequenzkontrollsignal, welches durch eine automatische Frequenzkontrolle hervorgebracht wird, ergibt, wobei der zweite Frequenzschritt kleiner ist als der erste Frequenzschritt, und Überprüfen, ob der zweite Frequenzpunkt eine zweite Bedingung erfüllt, welche darin besteht, kontinuierlich ein vertikales Synchronisierungssignal oder das horizontale Synchronisierungssignal zu erfassen und zu überprüfen, ob es in einer vorbestimmten Anzahl auftritt;
(d) wenn die zweite Bedingung erfüllt ist, Überprüfen, ob eine Differenz zwischen dem zweiten Frequenzpunkt und einer Zielfrequenz, welche eine angenommene Frequenz, welche ein Fernsehprogramm transportiert, ist, kleiner ist als eine erste Frequenzdifferenz;
(e) wenn die zweite Bedingung nicht erfüllt ist, Aktualisieren der Anfangsfrequenz auf die Frequenz des Eingangspunktes und Weiterverfahren mit Schritt (a);
(f) wenn die Differenz, die in Schritt (d) bestimmt worden ist, zwischen dem zweiten Frequenzpunkt und der Zielfrequenz kleiner ist als die erste Frequenzdifferenz, Aufzeichnen, dass ein Fernsehprogramm an dem zweiten Frequenzpunkt existiert; wenn die Differenz kleiner oder größer als die erste Frequenzdifferenz ist, dann wird der zweiten Frequenzpunkt nicht als ein Fernsehprogramm aufgezeichnet;
(g) Aktualisieren der Anfangsfrequenz wie in Schritt (b) und Wiederholen der Schritte (a) bis (f) durch das Frequenzband.

2. Verfahren gemäß Anspruch 1, wobei Schritt (f) weiter umfasst:
(f1) Erhöhen einer Zahl, wenn die Differenz zwischen dem zweiten Frequenzpunkt und der Zielfrequenz die erste Frequenzdifferenz übersteigt und Bestimmen, ob die Zahl eine vorbestimmte Zahl übersteigt;
(f2) wenn die Zahl eine vorbestimmte Zahl übersteigt, Bestimmen, ob der Unterschied zwischen dem zweiten Frequenzpunkt und der Zielfrequenz eine zweite Frequenzdifferenz übersteigt, wobei die zweite Frequenzdifferenz größer ist, als die erste Frequenzdifferenz; und (f3) wenn die Zahl die vorbestimmte Zahl nicht übersteigt, Aktualisieren des Eingangspunktes auf den zweiten Frequenzpunkt und Weiterverfahren mit Schritt (c).

3. Verfahren gemäß Anspruch 2, wobei der Schritt (f2) weiter umfasst:
(h) wenn die Differenz zwischen dem zweiten Frequenzpunkt und der Zielfrequenz nicht die zweite Frequenzdifferenz überschreitet, Bestimmen, ob der zweite Frequenzpunkt derselbe ist, wie die zuvor aufgezeichnete Frequenz; wenn das richtig ist, Aktualisierung der Anfangsfrequenz auf den zweiten Frequenzpunkt und Weiterverfahren mit Schritt (g)

4. Verfahren gemäß Anspruch 3, wobei der Schritt (h) weiter umfasst:
Aktualisieren der Anfangsfrequenz wie in Schritt (b) und Weiterverfahren mit Schritt (g), wenn die Differenz zwischen dem zweiten Frequenzpunkt und der Zielfrequenz die zweite Frequenzdifferenz überschreitet.

5. Verfahren gemäß Anspruch 3, wobei der Schritt (h) weiter umfasst: Überprüfen, ob der zweite Frequenzpunkt eine dritte Bedingung erfüllt, wenn der zweite Frequenzpunkt von der vorher aufgezeichneten Frequenz verschieden ist und Aufzeichnen, dass das Fernsehprogramm an dem zweiten Frequenzpunkt besteht, wobei die dritte Bedingung umfasst:
(h1) das erfolgreiche Erfassen des horizontalen Synchronisierungssignals und des vertikalen Synchronisierungssignals;
(h2) ein Videosignal, das in dem zweiten Frequenzpunkt transportiert wird, ist vereinbar mit dem vorbestimmten Fernsehsystem; und
(h3) ein Audiosignal, das in dem zweiten Frequenzpunkt transportiert wird, ist vereinbar ist mit dem vorbestimmten Fernsehsystem.

6. Verfahren gemäß Anspruch 5, weiter umfassend:
Aktualisieren der Anfangsfrequenz wie in Schritt (b) und Weiterverfahren mit Schritt (g), wenn die dritte Bedingung nicht erfüllt ist.

7. Verfahren gemäß Anspruch 1, wobei die Bestimmung des zweiten Frequenzpunktes bestimmt, ob die Frequenz des zweiten Frequenzpunktes entweder (1) auf die Frequenz des Eingangspunktes plus des zweiten Frequenzschrittes oder (2) auf die Frequenz des Eingangspunktes minus des zweiten Frequenzschrittes gemäß dem Frequenzkontrollsignal gesetzt wird.

8. Verfahren gemäß Anspruch 7, wobei:
der Frequenzpunkt in Schritt (a) eine Frequenz gleich der Anfangsfrequenz plus dem ersten Frequenzschritt ist und das Verfahren weiter umfasst: Aktualisieren der Anfangsfrequenz auf die Frequenz des Eingangspunktes; und Weiterverfahren mit Schritt (a), wenn der zweite Frequenzpunkt, der in Schritt (c) bestimmt wird, gleich dem Eingangspunkt minus dem zweiten Frequenzschritt ist.

9. Verfahren nach Anspruch 7, wobei der Frequenzpunkt in Schritt (a) eine Frequenz ist, die gleich ist mit der Anfangsfrequenz minus dem ersten Frequenzschritt und das Verfahren weiter das Aktualisieren der Anfangsfrequenz auf die Frequenz des Eingangspunktes umfasst und das Weiterverfahren mit Schritt (a), wenn der zweite Frequenzpunkt, der in Schritt (c) bestimmt wird, gleich ist mit dem Eingangspunkt plus dem zweiten Frequenzschritt.

10. Verfahren gemäß Anspruch 1, wobei das Verfahren vor Schritt (c) umfasst:
- Bestimmen, ob das Fernsehprogramm an einer Frequenz existiert, welche einen dritten Frequenzschritt vom Eingangspunkt entfernt ist, wobei der dritte Frequenzschritt kleiner ist als der erste Frequenzschritt, aber den zweiten Frequenzschritt übersteigt.

11. Eine Programmsuchvorrichtung (20) zum Auffinden eines Programms in einem Frequenzband, umfassend:
Einen Empfänger (22), welcher auf einen Frequenzpunkt eingestellt werden kann, der von einem ersten Frequenzschritt und einer Anfangsfrequenz gebildet ist oder auf einen zweiten Frequenzpunkt eingestellt werden kann, der von einem zweiten Frequenzschritt und einem Eingangspunkt gebildet ist;
ein Videoprozessor (24), der ein Horizontalsignal und ein Vertikalsignal zur Verfügung stellen kann; und
ein Hauptprozessor (21), der konfiguriert ist, ein Verfahren nach Anspruch 1 auszuführen.

12. Vorrichtung (20) nach Anspruch 11, weiter umfassend eine automatische Frequenzkontrolle (28), die konfiguriert ist, ein Frequenzkontrollsignal zur Verfügung zu stellen, wobei der Schritt ( c ) weiter das Erfassen eines zweiten Frequenzpunktes gemäß dem Frequenzkontrollsignals, dem Eingangspunkt und dem zweiten Frequenzschritt umfasst, und das Bestimmen, ob das Signal, welches an dem zweiten Frequenzpunkt empfangen wurde, eine zweite Bedingung erfüllt, welche in der kontinuierlichen Erfassung des Vertikalsignals oder des Horizontalsignals für eine vorbestimmte Anzahl besteht; wenn die zweite Bedingung erfüllt ist, ist der Hauptprozessor (21) konfiguriert, um zu bestimmen, ob die Differenz zwischen dem zweiten Frequenzpunkt und einer Zielfrequenz kleiner ist als die erste Frequenzdifferenz, und wenn die zweite Bedingung nicht erfüllt ist, aktualisiert der Hauptprozessor (21) die Anfangsfrequenz auf die Frequenz des Eintrittspunktes.

13. Vorrichtung (20) nach Anspruch 12, wobei der Hauptprozessor (21) weiter so konfiguriert ist, um zu bestimmen, ob die Frequenz des zweiten Frequenzpunktes auf 1) die Frequenz des Eingangspunktes plus dem zweiten Frequenzschritt oder 2) die Frequenz des Eingangspunktes minus dem zweiten Frequenzschritt gemäß dem Frequenzkontrollsignal gesetzt wird, wenn der Frequenzpunkt in Schritt a) gleich der Anfangsfrequenz minus dem ersten Frequenzschritt ist und der Hauptprozessor (21) bestimmt, dass die Frequenz des zweiten Frequenzpunkts auf die Frequenz des Eingangspunktes plus dem zweiten Frequenzschritt gesetzt wird, aktualisiert der Hauptprozessor (21) die Anfangsfrequenz auf die Frequenz des Anfangspunktes und verfährt weiter mit Schritt (a); und
wenn der Frequenzpunkt in Schritt (a) gleich der Anfangsfrequenz plus dem ersten Frequenzschritt ist und der Hauptprozessor (21) bestimmt, die Frequenz des zweiten Frequenzpunktes auf die Frequenz des Eingangspunkts minus dem zweiten Frequenzschritt zu setzen, aktualisiert der Hauptprozessor (21) die Anfangsfrequenz auf die Frequenz des Eingangspunktes und verfährt weiter mit Schritt (a).

14. Vorrichtung (20) gemäß Anspruch 12, umfasst weiter ein Aufnahmegerät (25), wobei das Aufnahmegerät (25), wenn die zweite Bedingung erfüllt ist und der Hauptprozessor (21) bestimmt, dass die Differenz zwischen dem zweiten Frequenzpunkt und der Zielfrequenz eine erste Frequenzdifferenz überschreitet, ausgebildet ist, um eine Zahl zu erhöhen, wenn die Differenz zwischen dem zweiten Frequenzpunkt und der Zielfrequenz die erste Frequenzdifferenz überschreitet, und das Aufnahmegerät (25) ist konfiguriert, um zu bestimmen, ob die Anzahl eine vorbestimmte Anzahl überschreitet; wenn die Anzahl die vorbestimmte Anzahl nicht überschreitet, ist das Aufnahmegerät weiter konfiguriert, um den zweiten Frequenzpunkt auf den Eingangspunkt zu aktualisieren und der Hauptprozessor (21) führt Schritt (c) aus.

15. Vorrichtung (20) gemäß Anspruch 14, wobei vor Schritt ( c) der Hauptprozessor (21) weiter konfiguriert ist, zu ermitteln, ob ein Fernsehprogramm an einer Frequenz existiert, die einen dritten Frequenzschritt vom Eingangspunkt entfernt ist und der dritte Frequenzschritt kleiner ist als der erste Frequenzschritt, aber den zweiten Frequenzschritt überschreitet.

16. Vorrichtung (20) nach Anspruch 14, wobei, wenn die Zahl eine vorbestimmte Zahl überschreitet, der Hauptprozessor (21) konfiguriert ist, zu bestimmen, ob eine Differenz zwischen dem zweiten Frequenzpunkt und der Zielfrequenz eine zweite Frequenzdifferenz überschreitet, wobei die zweite Frequenzdifferenz größer ist als die erste Frequenzdifferenz; wenn die Differenz zwischen den zweiten Frequenzpunkt und der Zielfrequenz die zweite Frequenzdifferenz überschreitet, ist der Hauptprozessor (21) weiter konfiguriert die Anfangsfrequenz gemäß dem ersten Frequenzschritt zu aktualisieren.

17. Vorrichtung (20) nach Anspruch 16, wobei, wenn die zweite Bedingung erfüllt ist und die Differenz zwischen dem zweiten Frequenzpunkt und der Zielfrequenz gleich der ersten Frequenzdifferenz ist oder den zweiten Frequenzschritt überschreitet, der Hauptprozessor (21) konfiguriert ist, zu bestimmen, ob der zweite Frequenzpunkt gleich der vorher aufgenommen Frequenz ist; wenn dem so ist, aktualisiert der Hauptprozessor (21) die Anfangsfrequenz auf den Eingangspunkt und verfährt weiter mit Schritt (d).

18. Vorrichtung (20) gemäß Anspruch 17, wobei wenn der Hauptprozessor (21) weiter konfiguriert ist, zu bestimmen, ob der zweite Frequenzpunkt ungleich der vorher aufgenommene Frequenz ist, der Hauptprozessor (21) weiter prüft, ob eine dritte Bedingung erfüllt ist; wenn die dritte Bedingung erfüllt ist, ist das Aufnahmegerät (21) konfiguriert aufzunehmen, dass das Fernsehprogramm an dem zweiten Frequenzpunkt existiert, wobei die dritte Bedingung umfasst:
das horizontale Synchronisierungssignal und das vertikale Synchronisierungssignal wurden erfolgreich ermittelt;
das Videosignal, welches in dem zweiten Frequenzpunkt transportiert wird, ist konsistent mit einem vorbestimmten Fernsehsystem;
das Audiosignal, welches in dem zweiten Frequenzpunkt transportiert wird, ist konsistent mit einem vorbestimmten Fernsehsignal.

## Revendications

1. Procédé permettant de localiser un programme dans une bande de fréquences, comprenant le fait de :
(0) établir une fréquence initiale et un premier saut de fréquence ;
(a) déterminer une position de fréquence, laquelle démarre à partir de l'une des fréquences initiales et résulte de la fréquence initiale et du premier saut de fréquence ;
(a1) vérifier si la position de fréquence dépasse les valeurs limites de la bande de fréquences, lesquelles sont déterminées par un système TV ;
(a2) vérifier si la position de fréquence satisfait une première condition qui est de détecter de façon continue un signal de synchronisation horizontal et vérifier s'il apparait selon un nombre de fois prédéterminé ;
(b) lorsque la première condition est satisfaite, enregistrer la position de fréquence comme étant un point d'entrée, et lorsque la première condition n'est pas satisfaite, actualiser la fréquence initiale en ajoutant ou en soustrayant le premier saut de fréquence à/de la fréquence initiale et aller à l'étape (a) ;
(c) déterminer une seconde position de fréquence, laquelle démarre à partir du point d'entrée et résulte du point d'entrée, le deuxième saut de fréquence et un signal de commande de fréquence étant générés par une commande automatique de fréquence, dans lequel le deuxième saut de fréquence est inférieur au premier saut de fréquence, et vérifier si la seconde position de fréquence satisfait une deuxième condition qui est de détecter de façon continue un signal de synchronisation vertical ou le signal de synchronisation horizontal et vérifier s'il apparait selon un nombre de fois prédéterminé ;
(d) lorsque la deuxième condition est satisfaite, déterminer si une différence entre la seconde position de fréquence et une fréquence cible, laquelle est une fréquence estimée pour acheminer un programme de télévision, est inférieure à une première différence de fréquences ;
(e) lorsque la seconde condition n'est pas satisfaite, actualiser la fréquence initiale pour être la fréquence du point d'entrée et aller à l'étape (a) ;
(f) si la différence déterminée à l'étape (d) entre la seconde position de fréquence et la fréquence cible est inférieure à la première différence de fréquences, enregistrer qu'un programme de télévision existe au niveau de la seconde position de fréquence ; si la différence est égale ou supérieure à la première différence de fréquences, alors ne pas enregistrer la seconde position de fréquence comme un programme de télévision ;
(g) actualiser la fréquence initiale comme à l'étape (b) et répéter les étapes (a) - (f) à travers la bande de fréquences.

2. Procédé selon la revendication 1, dans lequel l'étape (f) comprend, de plus,
(f1) d'incrémenter un certain nombre si la différence entre la seconde position de fréquence et la fréquence cible dépasse la première différence de fréquences, et déterminer si le nombre dépasse un nombre prédéterminé ;
(f2) lorsque le nombre dépasse le nombre prédéterminé, déterminer si la différence entre la seconde position de fréquence et la fréquence cible dépasse une seconde différence de fréquences, dans lequel la seconde différence de fréquences est plus élevée que la première différence de fréquences ; et
(f3) lorsque le nombre ne dépasse pas le nombre prédéterminé, actualiser le point d'entrée pour être la seconde position de fréquence et aller à l'étape (c).

3. Procédé selon la revendication 2, dans lequel l'étape (f2) comprend, de plus, le fait de :
(h) lorsque la différence entre la seconde position de fréquence et la fréquence cible ne dépasse pas la seconde différence de fréquence, déterminer si la seconde position de fréquence est la même qu'une fréquence enregistrée antérieurement ; si oui, actualiser la fréquence initiale pour être la seconde position de fréquence, et aller à l'étape (g).

4. Procédé selon la revendication 3, dans lequel l'étape (h) comprend, de plus, le fait d'actualiser la fréquence initiale comme dans l'étape (b) et d'aller à l'étape (g) lorsque la différence entre la seconde position de fréquence et la fréquence cible dépasse la seconde différence de fréquences.

5. Procédé selon la revendication 3, dans lequel l'étape (h) comprend, de plus, le fait de vérifier si la seconde position de fréquence satisfait une troisième condition lorsque la seconde position de fréquence est différente de la fréquence enregistrée précédemment, et d'enregistrer que le programme de télévision existe au niveau de la seconde position de fréquence, dans lequel la troisième condition comprend le fait de :
(h1) détecter avec succès le signal de synchronisation horizontal et le signal de synchronisation vertical ;
(h2) un signal vidéo acheminé sur la seconde position de fréquence compatible avec un système de télévision prédéterminé : et
(h3) un signal audio acheminé sur la seconde position de fréquence compatible avec le système de télévision prédéterminé.

6. Procédé selon la revendication 5 comprenant, de plus : le fait d'actualiser la fréquence initiale comme dans l'étape (b) et d'aller à l'étape (g) lorsque la troisième condition n'est pas satisfaite.

7. Procédé selon la revendication 1, dans lequel déterminer la seconde position de fréquence est de déterminer si on doit établir la fréquence de la seconde position de fréquence comme étant, soit (1) la fréquence du point d'entrée augmentée du deuxième saut de fréquence, soit (2) la fréquence du point d'entrée diminuée du deuxième saut de fréquence, selon le signal de commande de fréquence

8. Procédé selon la revendication 7, dans lequel:
la position de fréquence dans l'étape (a) est une fréquence égale à la fréquence initiale augmentée du premier saut de fréquence, et le procédé comprend, de plus, le fait de :
actualiser la fréquence initiale pour être la fréquence du point d'entrée ; et
aller à l'étape (a) si la seconde position de fréquence déterminée à l'étape (c) est égale au point d'entrée diminuée du deuxième saut de fréquence.

9. Procédé selon la revendication 7, dans lequel la position de fréquence dans l'étape (a) est une fréquence égale à la fréquence initiale diminuée du premier saut de fréquence et comprend, de plus, le fait d'actualiser la fréquence initiale pour être la fréquence du point d'entrée et d'aller à l'étape (a) si la seconde position de fréquence déterminée dans l'étape (c) est égale au point d'entrée augmentée du deuxième saut de fréquence.

10. Procédé selon la revendication 1, avant l'étape (c), comprenant, de plus, le fait de détecter si un programme de télévision existe au niveau d'une fréquence qui est distante d'un troisième saut de fréquence à partir du point d'entrée, dans lequel le troisième saut de fréquence est inférieur au premier saut de fréquence mais dépasse le deuxième saut de fréquence.

11. Appareil de recherche de programme (20) permettant de localiser un programme dans une bande de fréquences, comportant :
un dispositif d'accord (22) configuré pour s'accorder à une position de fréquence générée à partir d'un premier saut de fréquence et d'une fréquence initiale ou pour s'accorder à une seconde position de fréquence générée à partir d'un deuxième saut de fréquence et d'un point d'entrée ;
un processeur vidéo (24) configuré pour fournir un signal horizontal et un signal vertical ; et
un processeur central (21) configuré pour exécuter le procédé selon la revendication 1.

12. Appareil de recherche de programme (20) selon la revendication 11 comprenant, de plus, une commande de fréquence automatique (28) configurée pour fournir un signal de commande de fréquence, dans lequel l'étape (c) comprend, de plus, le fait de détecter la seconde position de fréquence selon le signal de commande de fréquence, le point d'entrée et le deuxième saut de fréquence et de déterminer si un signal reçu au niveau de la seconde position de fréquence satisfait une deuxième condition qui est une détection continue du signal vertical ou du signal horizontal selon le nombre de fois prédéterminé ; lorsque la deuxième condition est satisfaite, le processeur central (21) configuré pour déterminer si une différence entre la seconde position de fréquence et une fréquence cible est inférieure à la première différence de fréquences, et lorsque la deuxième condition n'est pas satisfaite, le processeur central (21) actualise la fréquence initiale pour être la fréquence du point d'entrée.

13. Appareil (20) selon la revendication 12, dans lequel le processeur central (21) est configuré, de plus, en vue de déterminer si on doit établir la fréquence de la seconde position de fréquence comme étant 1) la fréquence du point d'entrée augmentée du deuxième saut de fréquence, ou 2) la fréquence du point d'entrée diminuée du deuxième saut de fréquence en conformité avec le signal de commande de fréquence,
lorsque la position de fréquence de l'étape (a) est égale à la fréquence initiale diminuée du premier saut de fréquence et que le processeur central (21) détermine d'établir la fréquence de la seconde position de fréquence comme la fréquence du point d'entrée augmentée du deuxième saut de fréquence, le processeur central (21) actualise la fréquence initiale pour être la fréquence du point d'entrée et aller à l'étape (a) ; et
lorsque la position de fréquence de l'étape (a) est égale à la fréquence initiale augmentée du premier saut de fréquence et que le processeur central (21) détermine d'établir la fréquence de la seconde position de fréquence comme la fréquence du point d'entrée diminuée du deuxième saut de fréquence, le processeur central (21) actualise la fréquence initiale pour être la fréquence du point d'entrée et aller à l'étape (a).

14. Appareil (20) selon la revendication 12 comprenant, de plus, un enregistreur (25), lorsque la deuxième condition est satisfaite et que le processeur central (21) détermine que la différence entre la seconde position de fréquence et la fréquence cible dépasse la première différence de fréquence, l'enregistreur (25) est configuré pour incrémenter un nombre si la différence entre la seconde position de fréquence et la fréquence cible dépasse la première différence de fréquence, et l'enregistreur (25) est configuré pour déterminer si le nombre dépasse un nombre prédéterminé, lorsque le nombre ne dépasse pas le nombre prédéterminé, l'enregistreur (25) est configuré, de plus, pour actualiser la seconde position de fréquence pour être le point d'entrée et le processeur central (21) exécute l'étape (c).

15. Appareil (20) selon la revendication 14, dans lequel avant l'étape (c), le processeur central (21) est configuré, de plus, pour détecter si un programme de télévision existe au niveau d'une fréquence qui est distante d'un troisième saut de fréquence à partir du point d'entrée, et si le troisième saut de fréquence est inférieur au premier saut de fréquence mais excède le deuxième saut de fréquence.

16. Appareil (20) selon la revendication 14, lorsque le nombre excède le nombre prédéterminé, le processeur central (21) est configuré pour déterminer si une différence entre la deuxième position de fréquence et la fréquence cible excède une deuxième différence de fréquences, dans lequel la deuxième différence de fréquences est plus grande que la première différence de fréquences ; lorsque la différence entre la seconde position de fréquence et la fréquence cible excède la deuxième différence de fréquences, le processeur central (21) est configuré, de plus, pour actualiser la fréquence initiale selon le premier saut de fréquence.

17. Appareil (20) selon la revendication 16, lorsque la deuxième condition est satisfaite, et que la différence entre la seconde position de fréquence et la fréquence cible ne dépasse pas la première différence de fréquences ou le deuxième saut de fréquence, le processeur central (21) est configuré pour déterminer si la seconde position de fréquence est la même qu'une fréquence enregistrée précédemment ; si oui, le processeur central (21) actualise la fréquence initiale pour être le point d'entrée et va à l'étape (d).

18. Appareil (20) selon la revendication 17, lorsque le processeur central (21) est configuré, de plus, pour déterminer que la seconde position de fréquence n'est pas la même que la fréquence enregistrée précédemment, le processeur central (21) vérifie, de plus, si une troisième condition est satisfaite ; lorsque la troisième condition est satisfaite, l'enregistreur (25) est configuré pour enregistrer que le programme de télévision existe au niveau de la seconde position de fréquence, dans lequel la troisième condition comprend le fait que
le signal de synchronisation horizontal et le signal de synchronisation vertical sont détectés avec succès ;
le signal vidéo acheminé sur la seconde position de fréquence est compatible avec un système de télévision prédéterminé ; et
le signal audio acheminé sur la seconde position de fréquence est compatible avec le système de télévision prédéterminé.
